# EUROPEAN PATENT APPLICATION

(11) **EP 4 715 884 A1**
(43) Date of publication of application: **25.03.2026**
(21) Application number: 25203619.9
(22) Date of filing: 22.09.2025
(51) Int. Cl.: H01M 4/04, H01M 4/136, H01M 4/1391, H01M 4/58, H01M 4/62, H01M 10/052

(54) **POSITIVE ELECTRODES AND RECHARGEABLE LITHIUM BATTERIES INCLUDING THE SAME**

(30) Priority: 23.09.2024 KR 20240128276
(71) Applicant: SAMSUNG SDI CO., LTD., Yongin-si, Gyeonggi-do 17084 (KR)
(72) Inventor: CHOI, Jewon, Yongin-si, Gyeonggi-do 17084 (KR); KIM, Eunji, Yongin-si, Gyeonggi-do 17084 (KR); CHO, Yunshik, Yongin-si, Gyeonggi-do 17084 (KR); JUNG, Kyunghwa, Yongin-si, Gyeonggi-do 17084 (KR); LEE, Kukjoo, Yongin-si, Gyeonggi-do 17084 (KR); PARK, Sujin, Yongin-si, Gyeonggi-do 17084 (KR); CHO, Minho, Yongin-si, Gyeonggi-do 17084 (KR); KIM, Hana, Yongin-si, Gyeonggi-do 17084 (KR); LEE, Jungmin, Yongin-si, Gyeonggi-do 17084 (KR); NAM, Junghyun, Yongin-si, Gyeonggi-do 17084 (KR)
(74) Representative: Maiwald GmbH

(57) **Abstract**

Provided is a positive electrode including a positive electrode current collector; and a positive electrode active material layer located on the collector and including a positive electrode active material, a copolymer binder, and an amine. The copolymer binder includes a first structural unit including a carboxyl group and a nonionic second structural unit, and the carboxyl group and the amine are present in a form of a salt. The positive electrode increases capacity while reducing production cost, thereby ensuring long cycle-life characteristics and improving high-voltage characteristics and high-temperature storage characteristics. The rechargeable lithium battery including the positive electrode may exhibit high initial charge/discharge capacity and efficiency even under high voltage driving conditions, and can achieve long cycle-life characteristics.

## Description

### BACKGROUND

### 1. Field

Positive electrodes, and rechargeable lithium batteries including the positive electrodes, are disclosed.

### 2. Description of the Related Art

A portable information device such as, e.g., a cell phone, a laptop, smart phone, and the like, or an electric vehicle, typically uses a rechargeable lithium battery having high energy density and convenient portability as a driving power source. Rechargeable lithium batteries with high energy density as a driving power source or power storage power source for hybrid or electric vehicles may be advantageous.

Various binders have been investigated to be included in rechargeable lithium batteries. Due to increasing demand for large-sized, high-capacity, or high-energy-density rechargeable lithium batteries, developing binders that can increase capacity while ensuring stability and enable operation at high voltages may be advantageous.

### SUMMARY

Some example embodiments include a positive electrode active material and a binder configured to achieve high density, high capacity, long cycle-life characteristics and high energy density, as well as a positive electrode and a rechargeable lithium battery using the positive electrode active material and the binder.

In some example embodiments, a positive electrode includes a current collector and a positive electrode active material layer on the above-mentioned collector and including a positive electrode active material, a copolymer binder, and an amine. The copolymer binder includes a first structural unit including a carboxyl group and a nonionic second structural unit, the carboxyl group and the amine are present in the form of a salt.

In some example embodiments, a method for manufacturing a positive electrode includes (a) preparing a positive electrode composition including a positive electrode active material, a copolymer binder, a basic material including an amine group, and a volatile acidic material; and (b) applying the positive electrode composition onto a current collector; wherein the copolymer binder includes a first structural unit including a carboxyl group and a nonionic second structural unit.

In some example embodiments, a positive electrode composition includes a positive electrode active material, a copolymer binder, an amine, and a volatile acidic material, wherein the copolymer binder includes a first structural unit including a carboxyl group and a nonionic second structural unit.

In some example embodiments, a rechargeable lithium battery including the positive electrode, a negative electrode, and an electrolyte is provided.

The positive electrode according to some example embodiments increases or maximizes capacity while reducing or minimizing production cost, thereby ensuring long cycle-life characteristics and improving high-voltage characteristics and high-temperature storage characteristics. The rechargeable lithium battery including the positive electrode may exhibit high initial charge/discharge capacity and efficiency even under high voltage driving conditions, and can achieve long cycle-life characteristics.

### BRIEF DESCRIPTION OF THE DRAWINGS

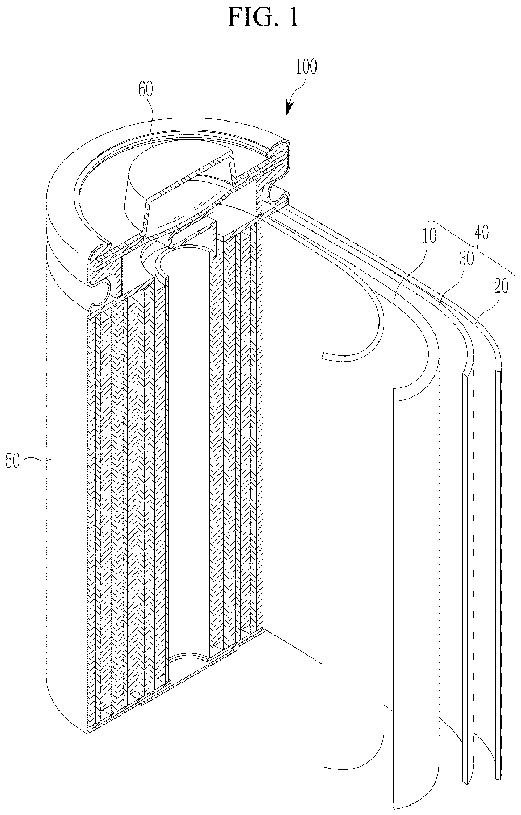

FIGS. 1 to 4 are views schematically illustrating a rechargeable lithium battery, according to some example embodiments.

### DETAILED DESCRIPTION

Hereinafter, embodiments are described in detail so that those of ordinary skill in the art can readily implement the embodiments. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" indicates a mixture, a laminate, a composite, a copolymer, an alloy, a blend, a reaction product, and the like, of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and the like, may be exaggerated for clarity, and like reference numerals designate like elements throughout the specification. It is understood that when an element such as a layer, film, region, or substrate is referred to as being "on" another element, the element can be "directly on" the other element, or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may indicate the diameter (D₅₀) of particles having a cumulative volume of 50 volume% in the particle size distribution. As used herein, when a definition is not otherwise provided, the average particle diameter indicates a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

"Nonionic" is interpreted as meaning that the compound does not include any ionic functional groups, or any functional groups which can be converted into ionic functional groups by protonation or deprotonation.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

In some example embodiments, a positive electrode includes a current collector, and a positive electrode active material layer located on the above-mentioned collector and including a positive electrode active material, a copolymer binder, and an amine. The copolymer binder includes a first structural unit including a carboxyl group and a nonionic second structural unit, and the carboxyl group and the amine are present in the form of a salt. The positive electrode active material layer may optionally further include a conductive material.

In general, because an organic solvent is included in a positive electrode active material layer, it may not be convenient to apply a binder having soluble property in an aqueous solvent to the positive electrode active material layer. Accordingly, the copolymer binder including a nonionic structural unit may be included to the positive electrode active material layer to improve solubility of the copolymer binder in the organic solvent and simultaneously or contemporaneously, as the carboxyl group included in the copolymer binder forms a crosslinking structure with the amine, to improve adhesive strength to the current collector and reduce interface resistance, even with a small amount of the binder.

### Positive Electrode Active Material Layer

The positive electrode active material layer according to some example embodiments is located on a current collector, and includes a positive electrode active material, a copolymer binder, and amine.

### Positive Electrode Active Material

The positive electrode active material may be a compound (lithiated intercalation compound) capable of intercalating and deintercalating lithium. For example, one or more types of composite oxides of lithium and a metal such as or including at least one of cobalt, manganese, nickel, and a combination thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0< α <2); LiₐNi_{1-b-c}Mn_{b}X_{c}O_{2-α}D_{α} (0.90≤a≤1.8, 0≤b≤0.5, 0≤c≤0.5, 0< α <2); LiₐNi_{b}Co_{c}L1_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may include, for example, at least one of lithium nickel-based oxide represented by Chemical Formula 11, lithium cobalt-based oxide represented by Chemical Formula 12, a lithium iron phosphate-based compound represented by Chemical Formula 13, cobalt-free lithium nickel-manganese-based oxide represented by Chemical Formula 14, or a combination thereof.

Chemical Formula 11: Liₐ₁Niₓ₁M¹_{y1}M²z1O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Cox₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1 M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

As an example, the positive electrode active material may be or include a high nickel-based positive electrode active material having a nickel content that is greater than or equal to about 80 mol%, greater than or equal to about 85 mol%, greater than or equal to about 90 mol%, greater than or equal to about 91 mol%, greater than or equal to about 94 mol%, and less than or equal to 99 mol% based on 100 mol% of a metal excluding lithium in the lithium transition metal composite oxide. The high nickel-based positive electrode active material may achieve high capacity and may be applicable to high-capacity, high-density rechargeable lithium batteries.

In some example embodiments, the positive electrode active material may include a lithium iron phosphate-based compound represented by Chemical Formula 13, for example at least one of lithium iron phosphate, lithium manganese iron phosphate, or a combination thereof.

The lithium iron phosphate-based compound is in the form of particles, and the average particle diameter (D₅₀) of the particles may be in a range of from about 0.01 µm to about 2 µm, for example, from about 0.1 µm to about 1 µm, or from about 0.5 µm to about 1 µm.

In one example, the lithium iron phosphate-based compound may be in the form of first particles, second particles, or a mixture of first particles and second particles. The first particles may be an assembly of multiple nano-sized primary particles or a secondary particle. The first particles may have a substantially spherical or substantially ellipsoidal shape as the primary particles are closely packed together. The average particle diameter of the first particles may be, for example, about 2 µm to about 15 µm, about 3 µm to about 12 µm, or about 3 µm to about 10 µm. The average particle diameter of the first particle may be larger than the average particle diameter of the second particle, which is described below. The average particle diameter of the primary particles of the first particle may be, for example, in a range of from about 10 nm to about 400 nm, from about 20 nm to about 300 nm, or from about 50 nm to about 200 nm. For example, the average particle diameter of the first particles may be obtained by randomly selecting about 30 first particles from an electron microscope image of lithium iron phosphate-based compounds, measuring the particle diameter, and taking the diameter (D₅₀) of the particles having a cumulative volume of 50 volume% from the particle size distribution as the average particle diameter. The average particle diameter of the primary particles of the first particle may be obtained by measuring the sizes of about 30 primary particles in an electron microscope image of the surface or cross-section of the first particle and taking the diameter (D₅₀) of the particles having a cumulative volume of 50 volume% in the particle size distribution as the average particle diameter.

A porosity of the first particle may be about 20% to about 50%. The porosity may be obtained by measuring an area ratio of the portion occupied by pores within the particle using an image analysis program such as Image J in a scanning electron microscope image of a cross-section of the first particle.

The second particle may have the form of a single particle. An average particle diameter of the second particles may be, for example, in a range of from about 10 nm to about 900 nm, from about 50 nm to about 500 nm, or from about 100 nm to about 300 nm. The average particle diameter of the second particles may be smaller than the average particle diameter of the first particles, and may be equal to or larger than the average particle diameter of the primary particles of the first particles. For example, the average particle diameter of the second particles can be obtained by randomly selecting about 30 second particles from an electron microscope image of a lithium iron phosphate-based compound, measuring the particle sizes, and taking the diameter (D₅₀) of the particles having a cumulative volume of 50 volume% from the particle size distribution as the average particle diameter.

The lithium iron phosphate-based compound may further include a carbon coating layer on the particle surface. The carbon coating layer may improve the electrical conductivity of the lithium iron phosphate-based compound and reduce the resistance of the positive electrode. The carbon coating layer may be formed using at least one raw material such as or including, for example, at least one of glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch resin, and a tar resin. For example, the carbon coating layer may be formed by arranging the raw materials on the surface of the lithium iron phosphate-based compound particles, and performing a sintering process thereto.

### Copolymer Binder

The copolymer binder according to some example embodiments includes the first structural unit including a carboxyl group and the nonionic second structural unit, wherein the carboxyl group is present in the form of a salt.

The copolymer binder, into which the structural unit including a salt-type carboxyl group is introduced, may form a crosslinking structure with a salt-type amine group to be described and thereby, attach positive electrode active material particles to one another and the positive electrode active material to the current collector even with a small amount of binder, and also reduce interface resistance of the positive electrode. Additionally, the copolymer binder, which is obtained by introducing the nonionic structural unit into a binder having soluble property only in an aqueous solvent, may be applied to an organic solvent. Accordingly, the positive electrode active material layer including the copolymer binder having these characteristics and amine may exhibit improved adhesive strength even with a small amount of the binder, and may reduce interface resistance, resultantly improving performance and cycle-life of the battery.

Hereinafter, each structural unit is described in detail.

The first structural unit may be derived from a monomer including a carboxyl group, wherein the monomer including a carboxyl group may include at least one of monocarboxylic acid and a derivative thereof, dicarboxylic acid and a derivative thereof, or a combination thereof. The monocarboxylic acid may include at least one of acrylic acid, methacrylic acid, and crotonic acid. The monocarboxylic acid derivative may include at least one of 2-ethylacrylic acid, isocrotonic acid, α-acetoxyacrylic acid, β-trans-aryloxyacrylic acid, α-chloro-β-E-methoxyacrylic acid, β-diaminoacrylic acid, and the like. The dicarboxylic acid may include at least one of amic acid, maleic acid, fumaric acid, and itaconic acid. The dicarboxylic acid derivative may include at least one of maleic acid such as methylmaleic acid, dimethylmaleic acid, phenylmaleic acid, chloromaleic acid, dichloromaleic acid, fluoromaleic acid, and the like; and a maleate such as methylallyl maleate, diphenyl maleate, nonyl maleate, decyl maleate, dodecyl maleate, octadecyl maleate, and fluoroalkyl maleate. Additionally, an acid anhydride that generates a carboxyl group by hydrolysis can also be included. The acid anhydride of dicarboxylic acid may include at least one of maleic anhydride, acrylic anhydride, methyl maleic anhydride, and dimethyl maleic anhydride. In addition, examples thereof may include monoester and diester of α,β-ethylenically unsaturated polycarboxylic acid, such as at least one of monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate. Most desirable examples of monomers including a carboxyl group may include at least one of acrylic acid, amic acid, or a combination thereof.

The first structural unit may be included in an amount in a range of from about 0.1 mol% to about 20 mol%, for example from about 0.5 mol% to about 15 mol%, or from about 1 mol% to about 10 mol% based on 100 mol% of the copolymer binder. When the first structural unit is included in the above range, the self-aggregation phenomenon of the copolymer binder can be reduced or prevented, while crosslinking with the amine described below can be increased or maximized to improve adhesive strength.

The nonionic second structural unit may be derived from a nonionic monomer, wherein the nonionic monomer may include at least one of an acrylic monomer, an imide monomer, or a combination thereof. At this time, the acrylic monomer may include, for example, at least one of an acrylic acid alkyl ester such as at least one of methyl acrylate, ethyl acrylate, n-propyl acrylate, isopropyl acrylate, n-butylacrylate, t-butylacrylate, pentylacrylate, hexylacrylate, heptylacrylate, octylacrylate, 2-ethylhexylacrylate, nonylacrylate, decylacrylate, lauryl acrylate, n-tetradecylacrylate, stearyl acrylate; a methacrylic acid alkyl ester such as at least one of methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate; or a combination thereof. The imide monomer may include, for example, a succinimide monomer such as at least one of N-(meth)acryloyloxymethylenesuccinimide, N-(meth)acryloyl-6-oxyhexamethylene-succinimide, N-(meth)acryloyl-8-oxyoctamethylenesuccinimide, and N-acryloyl-morpholine; the maleimide monomer may include, for example, at least one of N-cyclohexylmaleimide, N-isopropylmaleimide, N-laurylmaleimide, and N-phenylmaleimide; the itaconimide monomer may include, for example, N-methyl itaconimide, N-ethyl itaconimide, N-butyl itaconimide, N-octyl itaconimide, N-2-ethylhexyl itaconimide, N-cyclohexyl itaconimide, N-lauryl itaconimide, and the like, or a combination thereof; the polyimide monomer may include, for example, at least one of hexamethylenediamine, 4,4'-diphenyldiamine, dihydroxybenzidamine 1,2-bis(2-aminoethoxy)ethane, and polymers in which both terminal ends are substituted with primary amines; and the diisocyanate monomer may include, for example, at least one of hexamethylene diisocyanate, diphenylmethane diisocyanate, and diisocyanate cyclohexane, but are not necessarily limited thereto, and any monomer that can be included as a nonionic monomer in the relevant technical field may be included.

The nonionic second structural unit may be included in an amount that is greater than or equal to about 80 mol%, for example about 80 mol% to about 99.9 mol%, about 85 mol% to about 99.5 mol%, or about 90 mol% to about 99 mol% based on 100 mol% of the copolymer binder. When the nonionic second structural unit is included in the above range, the self-aggregation phenomenon of the copolymer binder may be reduced or prevented while increasing or maximizing crosslinking with the amine described below, thereby improving the adhesive strength.

The copolymer binder may be included in an amount in a range of from about 10 wt% to about 30 wt%, for example, from about 12 wt% to about 28 wt%, or from about 15 wt% to about 25 wt% based on the total 100 wt% of the positive electrode active material layer. When the content of the copolymer binder is within the above range, the flexibility of the electrode plate can be improved while increasing the adhesive strength of the electrode plate.

The copolymer binder may have a weight average molecular weight that is greater than or equal to about 100,000 g/mol, for example, in a range of about 300,000 g/mol to about 1,500,000 g/mol, about 600,000 g/mol to about 1,300,000 g/mol, or about 900,000 g/mol to about 1,100,000 g/mol. The weight average molecular weight is a polystyrene conversion value obtained by gel permeation chromatography. The copolymer binder may further improve the adhesive strength to an electrode plate within the weight average molecular weight ranges.

The aforementioned positive electrode active material layer may further include another type of binder in addition to the aforementioned copolymer binder. Representative examples of the added binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

### Amine

The amine exists in a salt form, and by forming a crosslink with the salt-form carboxyl group included in the copolymer binder, the positive electrode active material particles may be attached to each other even with a small amount of binder, the positive electrode active material may be attached to the positive electrode current collector, and the interfacial resistance of the positive electrode may be reduced.

The amine may be or include a primary amine such as at least one of methylamine, ethylamine, monoisopropylamine, n-butylamine, sec-butylamine, isobutylamine, t-butylamine, pentylamine, monoethanolamine, monopropanolamine, monoisopropanolamine, 1-amino-2-propanol, 2-amino-1-propanol, 3-amino-1-propanol, 4-amino-1-butanol, 2-(2-aminoethoxy)ethanol, methyl(methoxymethyl)aminoethane, methyl(methoxymethyl)aminoethanol, and methyl(butoxymethyl)aminoethanol; secondary amine such as dimethylamine, diethylamine, dipropylamine, diisopropylamine, dibutylamine, diisobutylamine, methylethylamine, methylpropylamine, methylisopropylamine, methylbutylamine, methylisobutylamine, diethanolamine, 2-(ethylamino)ethanol, 2-(methylamino)ethanol, and dibutanolamine; tertiary amine such as trimethylamine, triethylamine, tripropylamine, tributylamine, tripentylamine, dimethylethylamine, methyldiethylamine, methyldipropylamine, triethanolamine, N-methyldiethanolamine, N,N-dimethylethanolamine, N,N-diethylethanolamine, (butoxymethyl)diethylamine, (methoxymethyl)diethylamine, (methoxymethyl)diethanolamine, and (hydroxyethyloxymethyl)diethylamine; alkanol amine such as monoethanolamine, diethanolamine, triethanolamine, monopropanolamine, 2-aminoethanol, 2-(ethylamino)ethanol, 2-(methylamino)ethanol, N-methyl diethanolamine, N,N-dimethylethanolamine, N,N-diethylaminoethanol, 2-(2-aminoethylamino)-1-ethanol, 1-amino-2-propanol, 2-amino-1-propanol, 3-amino-1-propanol, 4-amino-1-butanol, and dibutanolamine; alkoxy amines such as (butoxymethyl)diethylamine, (methoxymethyl)diethylamine, (methoxymethyl)dimethylamine, (butoxymethyl)dimethylamine, (isobutoxymethyl)dimethylamine, (methoxymethyl)diethanolamine, (hydroxyethyloxymethyl)diethylamine, methyl (methoxymethyl)aminoethane, methyl (methoxymethyl)aminoethanol, methyl (butoxymethyl)aminoethanol, and 2-(2-aminoethoxy)ethanol; a cyclic amine forming a ring, such as 1-(2-hydroxyethyl)piperazine, 1-(2-aminoethyl)piperazine, 1-(2-hydroxyethyl)methylpiperazine, N-(3-aminopropyl)morpholine, 2-methylpiperazine, 1-methylpiperazine, 1-amino-4-methylpiperazine, 1-benzylpiperazine, 1-phenylpiperazine, N-methylmorpholine, 4-ethylmorpholine, N-formylmorpholine, N-(2-hydroxyethyl)morpholine, N-(3-hydroxypropyl)morpholine, or a combination thereof, and may be or include an alkanol amine, and may be or include 2-aminoethanol.

The amine may be included in an amount in a range of from about 0.1 wt% to about 1.0 wt%, for example, from about 0.1 wt% to about 0.5 wt%, or from about 0.1 wt% to about 0.2 wt% based on 100 wt% of the above positive electrode active material layer. When the content of amine is within the above range, crosslinking with the aforementioned copolymer binder can be increased or maximized, thereby improving the adhesive strength.

### Conductive Material

The positive electrode active material layer may further include a conductive material. The conductive material is included to provide electrode conductivity, and any electrically conductive material may be included as a conductive material unless the electrically conductive material causes a chemical change. Examples of the conductive material may include a carbon-based material such as at least one of natural graphite, artificial graphite, carbon black, acetylene black, ketjen black, a carbon fiber, a carbon nanofiber, a carbon nanotube, and particulate nanocarbon; a metal-based material including at least one of copper, nickel, aluminum, silver, and the like in the form of metal powder or metal fiber; a conductive polymer such as a polyphenylene derivative; or a combination thereof.

The conductive material may be included in an amount in a range of from about 1 wt% to about 4 wt%, for example from about 1.5 wt% to about 3.5 wt%, or from about 1.5 wt% to about 3 wt% based on 100 wt% of the positive electrode active material layer. When the content of the conductive material is within the above range, the resistance of the positive electrode may be lowered, thereby increasing the capacity of the battery, and enabling operation at high voltage.

The positive electrode active material layer may further include an organic solvent, for example N-methylpyrrolidone. Even when the aforementioned positive electrode active material layer includes an organic solvent, the solubility in the organic solvent can be improved by using a copolymer binder including a nonionic structural unit, and because the carboxyl group included in the copolymer binder forms a crosslinking structure with an amine group, the adhesive strength to the positive electrode current collector may be improved, and the interfacial resistance may be reduced, even when a small amount of binder is included.

The positive electrode current collector may include Al, and the like, but is not limited thereto.

### Method for manufacturing a positive electrode

In some example embodiments, a method for manufacturing a positive electrode includes (a) preparing a positive electrode composition comprising a positive electrode active material, a copolymer binder, a basic material including an amine group, and a volatile acidic material; and (b) applying the positive electrode composition onto a current collector; wherein the copolymer binder includes a first structural unit including a carboxyl group and a nonionic second structural unit.

Hereinafter, the positive electrode composition is described in detail.

### Positive Electrode Composition

In some example embodiments, a positive electrode composition includes a positive electrode active material, a copolymer binder, an amine, and a volatile acidic material, wherein the copolymer binder includes a first structural unit including a carboxyl group and a nonionic second structural unit.

The copolymer binder including a nonionic structural unit, which is included in the positive electrode composition, may improve solubility in an organic solvent and simultaneously or contemporaneously, as the carboxyl group included in the copolymer binder with the amine forms a crosslinking structure, improve adhesive strength to a positive electrode current collector even with a small amount of the binder and reduce interface resistance.

The positive electrode active material, the copolymer binder, and the amine are the same as those of the aforementioned positive electrode and are not redundantly redescribed in detail.

The positive electrode composition may further include a volatile acidic material. As the positive electrode composition includes the volatile acidic material, when the positive electrode composition is coated on a current collector and dried, because the volatile acidic material may be volatilized, the carboxyl group is not dissolved but separated, and forms a salt with the amine and thus a crosslinking structure, thereby improving adhesive strength even with a small amount of the binder, and reducing interface resistance.

The volatile acidic material may include at least one of 2-acetyloxybenzoic acid, acetic acid, ascorbic acid, aspartic acid, benzoic acid, camphorsulfonic acid, cinnamic acid, citric acid, edetic acid, ethanesulfonic acid, fumaric acid, gluconic acid, glutamic acid, glycolic acid, hydroxymaleic acid, hydroxynaphthalenecarboxylic acid, isethionic acid, lactic acid, lactobionic acid, lauric acid, maleic acid, malic acid, methanesulfonic acid, mucinic acid, oleic acid, oxalic acid, palmitic acid, pamoic acid, pantothenic acid, phenylacetic acid, phenylsulfonic acid, propionic acid, pyruvic acid, salicylic acid, stearic acid, tartaric acid, toluenesulfonic acid, trifluoroacetic acid, and valeric acid, or a combination thereof, and for example may be or include at least one of oxalic acid, maleic acid, acetic acid, or a combination thereof.

Based on 100 wt% of the positive electrode composition, the copolymer binder may be included in an amount in a range of from about 10 wt% to about 30 wt%, for example, from about 12 wt% to about 28 wt%, or from about 15 wt% to about 25 wt%. When the copolymer binder is included within the above ranges, adhesive strength to an electrode plate may not only be increased, but flexibility of the electrode plate may be improved.

Based on 100 wt% of the positive electrode composition, the amine may be included in an amount in a range of from about 0.1 wt% to about 1.0 wt% for example, from about 0.1 wt% to about 0.5 wt%, or from about 0.1 wt% to about 0.2 wt%. When the amine is included within the above ranges, the crosslinking with the above copolymer binder may be increased or maximized, improving adhesive strength.

Based on 100 wt% of the positive electrode composition, the volatile acidic material may be included in an amount in a range of from about 0.1 wt% to about 1.0 wt%, for example, from about 0.1 wt% to about 0.7 wt%, or from about 0.1 wt% to about 0.5 wt%. When the volatile acidic material is included within the above ranges, as acidity of the positive electrode composition is controlled, the carboxyl group may be crosslinked with the amine, improving adhesive strength.

The positive electrode composition may further include an organic solvent and for example N-methylpyrrolidone. Even when the positive electrode composition includes the organic solvent, the copolymer binder including a nonionic structural unit may be included to achieve improved solubility in the organic solvent, and simultaneously or contemporaneously, the carboxyl group included in the copolymer binder may form a crosslinking structure with the amine group, improving adhesive strength to a positive electrode current collector even with a small amount of the binder and reducing interface resistance.

### Rechargeable Lithium Battery

Some example embodiments include a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte solution.

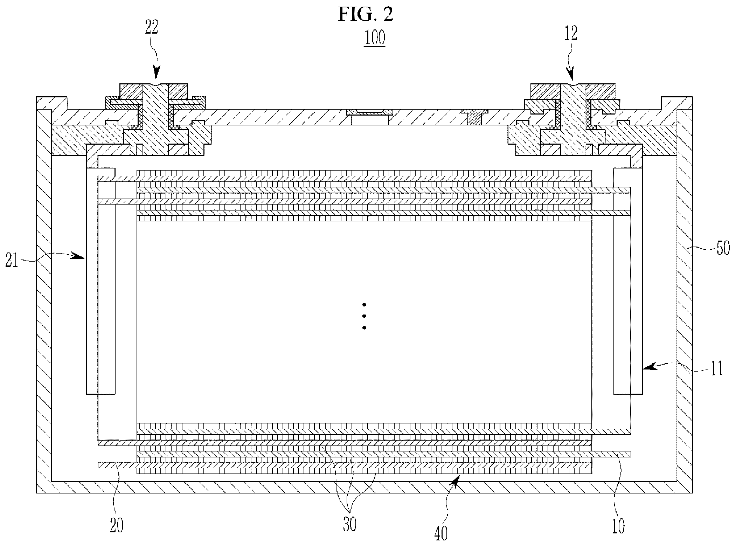

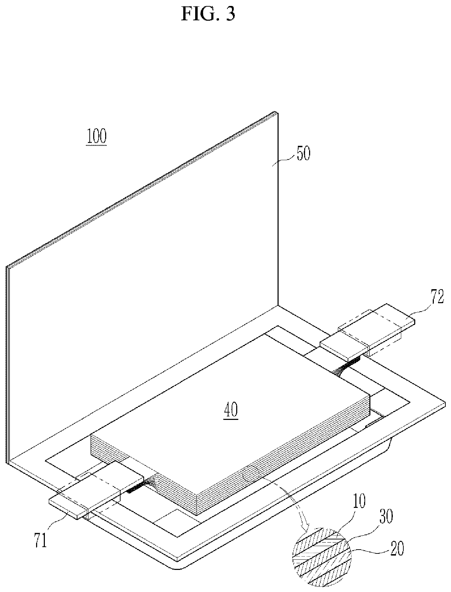

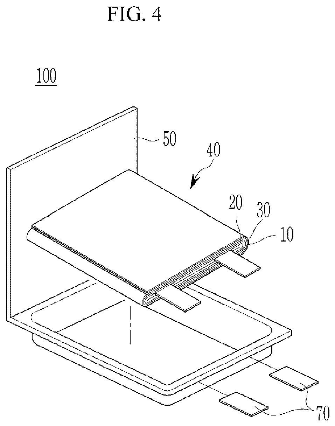

The rechargeable lithium battery may be classified into cylindrical, prismatic, pouch, coin, and the like, depending on the shape thereof. FIGS. 1 to 4 are schematic views showing the rechargeable lithium battery according to some example embodiments, where FIG. 1 is a cylindrical battery, FIG. 2 is a prismatic battery, and FIGS. 3 and 4 are pouch-shaped batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

### Negative Electrode

The negative electrode may include a current collector and a negative electrode active material layer on the current collector, and the negative electrode active material layer may include a negative electrode active material, and may further include a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, substantially spherical, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0<x≤2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of from about 0.5 µm to about 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a content of silicon may be in a range of from about 10 wt% to about 50 wt% and a content of amorphous carbon may be in a range of from about 50 wt% to about 90 wt% based on 100 wt% of the silicon-carbon composite. For example, when the composite includes silicon, amorphous carbon, and crystalline carbon, a content of silicon may be in a range of from about 10 wt% to about 50 wt%, a content of crystalline carbon may be in a range of from about 10 wt% to about 70 wt%, and a content of amorphous carbon may be in a range of from about 20 wt% to about 40 wt% based on 100 wt% of the silicon-carbon composite.

For example, a thickness of the amorphous carbon coating layer may be in a range of from about 5 nm to about 100 nm. An average particle diameter (D₅₀) of the silicon particles (primary particles) may be in a range of from about 10 nm to about 1 µm, or from about 10 nm to about 200 nm. The silicon particles may be present in the form of silicon alone, in the form of a silicon alloy, or in an oxidized form. The oxidized form of silicon may be represented by SiOₓ (0<x≤2). The atomic content ratio of Si:O, which indicates a degree of oxidation, may be in a range of from about 99:1 to about 33:67. As described herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed, the mixing ratio thereof may be a weight ratio in a range of about 1:99 to about 90:10.

### Binder

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof, may be mixed. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

### Conductive Material

The conductive material may be included to provide electrode conductivity, and any electrically conductive material may be included as a conductive material unless the electrically conductive material causes a chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

A content of the negative electrode active material may be in a range of from about 95 wt% to about 99.5 wt% based on 100 wt% of the negative electrode active material layer, and a content of the binder may be in a range of from about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, in a range of from about 1 µm to about 20 µm, from about 5 µm to about 15 µm, or from about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent is configured as a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be included alone or in a mixture of two or more types of solvents, and when two or more types of solvents are included in a mixture, a mixing ratio can be adjusted as desired according to the desired battery performance, which is widely known to those working in the field.

When using a carbonate-based solvent, a cyclic carbonate and a chain carbonate may be mixed and included, and the cyclic carbonate and the chain carbonate may be mixed in a volume ratio in a range of from about 1:1 to about 1:9.

The non-aqueous organic solvent may further include an aromatic hydrocarbon-based organic solvent. For example, a carbonate-based solvent and an aromatic hydrocarbon-based organic solvent may be mixed in a volume ratio in a range of from about 1:1 to about 30:1.

The electrolyte solution may further include at least one of vinylethyl carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of from about 0.1 M to about 2.0 M. When the concentration of lithium salt is within the above range, the electrolyte solution has desired ionic conductivity and viscosity, and thus desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness in a range of from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of from about 1 nm to about 2000 nm, for example, from about 100 nm to about 1000 nm, or from about 100 nm to about 700 nm.

The organic material and the inorganic material may be mixed in one coating layer, or a coating layer including an organic material and a coating layer including an inorganic material may be stacked together.

The thickness of the coating layer may be in a range of from about 0.5 µm to about 20 µm, for example, from about 1 µm to about 10 µm, or from about 1 µm to about 5 µm.

Examples and Comparative Examples of the present disclosure are described below. However, the following examples are only examples of the present disclosure, and the present disclosure is not limited to the following examples.

### Example 1

### 1. Manufacturing of Positive Electrode

90 wt% of LiFePO₄ as a positive electrode active material, 5 wt% of a polyacrylate solution including 10 mol% of a carboxyl group as a binder, 0.18 wt% of 2-aminoethanol, 0.18 wt% of oxalic acid, and 4.64 wt% of Super P^{®} as a conductive material were mixed in 30 ml of an N-methylpyrrolidone solvent to prepare a positive electrode composition. The prepared positive electrode composition was coated on an aluminum foil current collector, and then dried and compressed to manufacture a positive electrode.

### 2. Manufacturing of Negative Electrode

97.5 wt% of a graphite negative electrode active material, 1.5 wt% of carboxymethyl cellulose, and 1 wt% of a styrene butadiene rubber were mixed in a water solvent to prepare a negative electrode composition. The negative electrode composition was coated on a copper foil current collector, and then dried and compressed to manufacture a negative electrode.

### 3. Manufacturing of Rechargeable Lithium Battery Cell

The positive electrode and the negative electrode manufactured above were used, a polytetrafluoroethylene separator was used, and an electrolyte solution prepared by dissolving 1 M LiPF₆ in a mixed solvent of ethylene carbonate and dimethyl carbonate in a volume ratio of 3:7 was used to manufacture a rechargeable lithium battery cell in a common method.

### Example 2

A positive electrode and a rechargeable lithium battery cell were manufactured substantially in the same manner as in Example 1, with a difference that the positive electrode was manufactured by mixing 90 wt% of LiFePO₄, 5 wt% of a polyimide solution including 10 mol% of a carboxyl group, 0.17 wt% of 2-aminoethanol, 0.33 wt% of oxalic acid, and 4.5 wt% of Super P^{®}.

### Comparative Example 1

A positive electrode and a rechargeable lithium battery cell were manufactured substantially in the same manner as in Example 1, with a difference that PVdF was mixed instead of the polyacrylate, and the oxalic acid was not mixed in the manufacture of the positive electrode.

### Comparative Example 2

A positive electrode and a rechargeable lithium battery cell were manufactured substantially in the same manner as in Example 1, with a difference that the oxalic acid was not mixed in the manufacture of the positive electrode.

### Comparative Example 3

A positive electrode and a rechargeable lithium battery cell were manufactured substantially in the same manner as in Example 1, with a difference that PVdF was mixed instead of the polyacrylate, and the 2-aminoethanol was not mixed in the manufacture of the positive electrode.

### Comparative Example 4

A positive electrode and a rechargeable lithium battery cell were manufactured substantially in the same manner as in Example 1, with a difference that the 2-aminoethanol was not mixed in the manufacture of the positive electrode.

### Evaluation Example 1: Adhesive Strength Evaluation

The positive electrodes according to the Examples and the Comparative Examples were cut into a size of a width of 25 mm and a length of 100 mm. A double-sided adhesive tape with an area of a width 20 mm and a length of 40 mm was attached to an acryl plate with an area of a width of 40 mm and a length of 100 mm. The prepared positive electrode was attached to the double-sided adhesive tape, and then slightly pressed five times with a hand roller, and mounted on a universal testing machine (UTM) (20 kgf load cell), and one end of the positive electrode was peeling off about 25 mm and fixed to an upper clip of the tensile strength tester, while fixing the tape attached to one surface of the positive electrode to a lower clip, to measure 180 ° peeling strength, while peeling off the tape at a speed of 100 mm/min. Herein, the 180 ° peeling strength was expressed as adhesive strength, and the results are shown in Table 1 below.

### Evaluation Example 2: Interface Resistance Evaluation

The positive electrode plates for a rechargeable lithium battery according to the Examples and the Comparative Examples were evaluated with respect to electrode plate resistance in a 46 pin resistance measurement method. The electrode plate resistance was evaluated by measuring mixture resistance and interface resistance, and the results are shown in Table 1 below.

**Table 1:**

| | Adhesive strength (gf/mm) | Mixture resistance (Ohm/cm) | Interface resistance (Ohm/cm²) |
|---|---|---|---|
| Example 1 | 3.3 | 4.0 | 0.015 |
| Example 2 | 3.2 | 4.1 | 0.01 |
| Comparative Example 1 | 0.9 | 4.9 | 0.034 |
| Comparative Example 2 | 3.4 | 6.5 | 0.02 |
| Comparative Example 3 | 1.1 | 4.8 | 0.031 |
| Comparative Example 4 | 1.2 | 4.4 | 0.028 |

Referring to Table 1, the rechargeable lithium battery cells of the Examples, compared to the rechargeable lithium battery cells of the Comparative Examples, exhibited equivalent or improved adhesive strength to the positive electrode current collector and simultaneously or contemporaneously, reduced interface resistance.

### Evaluation Example 3: Battery Performance Evaluation

The rechargeable lithium battery cells of the Examples and the Comparative Examples were charged to 3.65 V at a constant current of 0.2 C, and subsequently maintained at the voltage to a current of 0.05 C, and then discharged to 2.5 V at the constant current of 0.2 C at 25 °C for first charging and discharging. Subsequently, the cells were charged to 3.65 V at the constant current of 0.2 C, and subsequently maintained at the voltage to a current of 0.05 C, and then discharged to 2.5 V at the constant current of 0.2 C at 25 °C for second charging and discharging. In Table 2, second discharge capacity was expressed as "3.65 V capacity."

Subsequently, the cells were repeatedly charged and discharged 50 times or more at 1.0 C within a voltage range of 3.0 V to 3.65 V at 45 °C to calculate a ratio of 50^{th} cycle discharge capacity of the 2^{nd} discharge capacity, and the results are shown as "3.65 V cycle-life" in Table 2 below.

**Table 2:**

| | 3.65 V capacity (mAh/g) | 3.65 V cycle-life (%, @50 cyc) |
|---|---|---|
| Example 1 | 4774 | 104.5 |
| Example 2 | 4791 | 105.0 |
| Comparative Example 1 | 4496 | 101.0 |
| Comparative Example 2 | 3640 | 93.0 |
| Comparative Example 3 | 4344 | 100.8 |
| Comparative Example 4 | 4505 | 102.0 |

Referring to Table 2, the rechargeable lithium battery cells of the Examples, compared to the cells of the Comparative Examples, were confirmed to exhibit equivalent or improved capacity and cycle-life characteristics.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode comprising:
a current collector; and
a positive electrode active material layer on the collector and including a positive electrode active material, a copolymer binder, and an amine;
wherein the copolymer binder comprises a first structural unit including a carboxyl group and a nonionic second structural unit, and
the carboxyl group and the amine are present in a form of a salt.

2. The positive electrode as claimed in claim 1, wherein the positive electrode active material is represented by Chemical Formula 13:
Chemical Formula 13: Liₐ₃Feₓ₃M⁴_{y3}PO_{4-b3}X_{b3}
wherein, in Chemical Formula 13, 0.9≤a3≤ 1.8, 0.6≤x3≤ 1, 0≤y3≤0.4, and 0≤b3≤0.1, M⁴ comprises one or more of Al, B, Ba, Ca, Ce, Co, Cr, Cu, Mg, Mn, Mo, Ni, Se, Si, Sn, Sr, Ti, V, W, Y, Zn and Zr, and X comprises one or more of F, P, and S.

3. The positive electrode as claimed in claim 1 or 2, wherein:
the first structural unit is derived from a monomer including a carboxyl group, and
the monomer including a carboxyl group comprises at least one of a monocarboxylic acid and a derivative thereof, and dicarboxylic acid and a derivative thereof.

4. The positive electrode as claimed in any one of claims 1 to 3, wherein the copolymer binder comprises about 0.1 mol% to about 20 mol% of the first structural unit based on 100 mol% of the copolymer binder.

5. The positive electrode as claimed in any one of claims 1 to 4, wherein:
the second structural unit is derived from a nonionic monomer, and
the nonionic monomer comprises at least one of an acrylic monomer and an imide monomer.

6. The positive electrode as claimed in any one of claims 1 to 5, wherein the amine comprises at least one of a primary amine, a secondary amine, a tertiary amine, an alkanol amine, an alkoxy amine, and a cyclic amine.

7. The positive electrode as claimed in any one of claim 1 to 6, wherein the copolymer binder is included in an amount in a range of from about 10 wt% to about 30 wt% and the amine is included in an amount in a range of from about 0.1 wt% to about 1.0 wt% based on the total 100 wt% of the positive electrode active material layer.

8. The positive electrode as claimed in any one of claims 1 to 7, wherein the positive electrode active material layer further comprises N-methylpyrrolidone.

9. A method for manufacturing a positive electrode, the method comprising:
(a) preparing a positive electrode composition comprising a positive electrode active material, a copolymer binder, a basic material including an amine group, and a volatile acidic material; and
(b) applying the positive electrode composition onto a current collector;
wherein the copolymer binder comprises a first structural unit including a carboxyl group and a nonionic second structural unit.

10. A positive electrode composition, comprising:
a positive electrode active material, a copolymer binder, an amine, and a volatile acidic material,
wherein the copolymer binder includes a first structural unit including a carboxyl group and a nonionic second structural unit.

11. The positive electrode composition as claimed in claim 10, wherein:
the first structural unit is derived from a monomer including a carboxyl group, and
the monomer including a carboxyl group comprises at least one of monocarboxylic acid and a derivative thereof, and dicarboxylic acid and a derivative thereof, optionally wherein
the second structural unit is derived from a nonionic monomer, and
the nonionic monomer comprises at least one of an acrylic monomer and an imide monomer, optionally wherein
the copolymer binder comprises about 0.1 mol% to about 20 mol% of the first structural unit based on 100 mol% of the copolymer binder.

12. The positive electrode composition as claimed in claim 10 or 11, wherein the amine comprises at least one of a primary amine, a secondary amine, a tertiary amine, an alkanol amine, an alkoxy amine, and a cyclic amine, optionally wherein
the volatile acidic material comprises at least one of oxalic acid, malic acid, and acetic acid.

13. The positive electrode composition as claimed in any one of claims 10 to 12, wherein the copolymer binder is included in an amount in a range of from about 10 wt% to about 30 wt%, the amine is included in an amount in a range of from about 0.1 wt% to about 1.0 wt%, and the volatile acidic material is included in an amount in a range of from about 0.1 wt% to about 1.0 wt% based on 100 wt% of the positive electrode composition.

14. The positive electrode composition as claimed in any one of claims 10 to 13, wherein the positive electrode composition further comprises **N-**methylpyrrolidone.

15. A rechargeable lithium battery, comprising:
the positive electrode as claimed in any one of claims 1 to 8,
a negative electrode, and
an electrolyte.
